# EUROPÄISCHE PATENTSCHRIFT

(11) **EP 4 344 768 B1**
(45) Veröffentlichungstag und Bekanntmachung des Hinweises auf die Patenterteilung: **21.01.2026**
(21) Anmeldenummer: 23199882.4
(22) Anmeldetag: 26.09.2023
(51) Int. Cl.: B01F 23/451, B01F 25/312, B01F 35/221, B01F 35/71, F16K 1/52, F16K 31/385, F16K 31/524, F16K 31/56

(54) **MISCHVORRICHTUNG ZUM MISCHEN VON CHEMIKALIEN MIT TRINKWASSER, SYSTEM ZUM MISCHEN VON CHEMIKALIEN MIT TRINKWASSER SOWIE VERWENDUNG EINER MISCHVORRICHTUNG**
MIXING DEVICE FOR MIXING CHEMICALS WITH DRINKING WATER, SYSTEM FOR MIXING CHEMICAL WITH DRINKING WATER, AND USE OF A MIXING DEVICE
DISPOSITIF DE MÉLANGE POUR MÉLANGER DES PRODUITS CHIMIQUES AVEC DE L'EAU POTABLE, SYSTÈME POUR MÉLANGER DES PRODUITS CHIMIQUES AVEC DE L'EAU POTABLE ET UTILISATION D'UN DISPOSITIF DE MÉLANGE

(30) Priorität: 27.09.2022 EP 22198215
(43) Veröffentlichungstag der Anmeldung: 03.04.2024
(73) Patentinhaber: PSG Germany GmbH, 47228 Duisburg (DE)
(72) Erfinder: Kalkkuhl, Tobias, 45470 Mülheim (DE); Lamers, Sebastian, 46519 Alpen (DE)
(74) Vertreter: Fish & Richardson P.C.

(56) Entgegenhaltungen:
- DE-U1- 202018 102 401
- US-A- 3 470 826
- US-A- 4 881 568
- US-A1- 2005 084 414
- US-A1- 2010 024 896
- US-A1- 2014 131 601
- US-B1- 9 409 134

## Beschreibung

Die Erfindung betrifft eine Mischvorrichtung zum Mischen von, insbesondere flüssigen, Chemikalien mit Trinkwasser, ein System umfassend mindestens zwei Mischvorrichtungen und eine Verwendung einer Mischvorrichtung.

Mischvorrichtung zum Mischen von, insbesondere flüssigen, Chemikalien mit Trinkwasser werden beispielsweise zum Mischen von Reinigungsmitteln, Spülmitteln und Desinfektionsmitteln, insbesondere für Großküchen, Industriebetriebe, landwirtschaftliche Betriebe und Betriebe des Nahrungsmittelgewerbes eingesetzt. Eine andere beispielhafte Einsatzmöglichkeit sind das Mischen von Bearbeitungszusätzen, Bohrmitteln und Schneidemitteln.

Die Mischvorrichtung weist ein Verbindungselement auf, das mindestens einen Einlass zum Anschließen an ein Trinkwassersystem, eine Öffnung zur Aufnahme eines Ventils und einen Auslass umfasst. Der Einlass, die Öffnung und der Auslass sind fluidisch verbunden. Das Ventil ist in der Öffnung des Verbindungselements angeordnet, wobei mit dem Ventil der Durchfluss vom Einlass zum Auslass steuerbar ist. Zudem umfasst die Mischvorrichtung ein Mischelement, das fluidisch mit dem Auslass verbunden ist. Das Mischelement ist zum Mischen von Chemikalien mit Trinkwasser ausgebildet.

Zum Mischen von Chemikalien mit Trinkwassern muss der Durchfluss des Trinkwassers gesteuert werden. Sobald Trinkwasser durch die Mischvorrichtung läuft, wird das Trinkwasser an dem Mischelement mit Chemikalien gemischt. Die Mischung aus Chemikalien und Trinkwasser kann anschließend verwendet werden.

Hierbei ist vor allem die Steuerung des Durchflusses bei bekannten Mischvorrichtungen problematisch. Als Ventil werden beispielsweise Magnetventile eingesetzt. Bei Magnetventilen muss die bedienende Person einen Magneten betätigen, um das Ventil zu öffnen. Folglich muss das Magnetventil während des Mischens die ganze Zeit gedrückt werden.

Alternativ sind Rastmechanismen bekannt, mit denen der Magnet gehalten wird, um das Ventil in der Offenstellung zu halten. Dabei verklemmt der Magnet häufig an dem Rastmechanismus, sodass das Ventil nicht wieder verschlossen werden kann. Hierdurch werden Trinkwasser und Chemikalien verschwendet.

Ferner benötigen Magnetventile magnetisches Material und Permanentmagneten.

Diese sind in der Herstellung energie- und kostenaufwendig. Zudem weisen Magnetventile im Innern häufig schlecht durchspülte Hohlräume auf, die die Wasserqualität negativ beeinflussen können. Ferner werden für Magnetventile verschiedenen Materialien benötigt wie beispielsweise Stahl, Elastomere und Kunststoffe. Hierbei kann die Trinkwassereignung der einzelnen Materialien nicht immer sichergestellt werden.

Außerdem sind Magnetventile sehr groß, da ein großer Magnet benötigt wird, um ein ausreichend starkes magnetisches Feld zu haben. Dadurch sind zum Betätigen des Magnetventils große Kräfte notwendig. Aufgrund der großen Kräfte muss das Magnetventil robust gestaltet werden und somit muss viel Material verwendet werden.

Weiterhin verschließen Magnetventile ruckartig das Ventil. Hierdurch wird das Ventil abrupt geschlossen und der Durchfluss ebenfalls abrupt unterbrochen. Dabei entsteht ein Druckanstieg in dem Rohrsystem des Trinkwassers. Dieser Druckanstieg kann das empfindliche Rohrsystem des Trinkwassers schädigen.

Die US 4 881 568 offenbart eine Mischvorrichtung nach dem Oberbegriff des Anspruchs 1.

Ausgehend von diesem Stand der Technik liegt der vorliegenden Erfindung die Aufgabe zu Grunde eine Mischvorrichtung vorzuschlagen, die zuverlässig, einfach bedienbar, energiesparend und kostensparend ist, wobei gleichzeitig eine Schädigung des Rohrsystem des Trinkwassers durch die Mischvorrichtung verhindert wird.

Erfindungsgemäß wird diese Aufgabe gemäß einem ersten Aspekt der Erfindung durch eine Mischvorrichtung entsprechend Anspruch 1 gelöst.

Chemikalien können beispielsweise Reinigungsmittel, Schmiermittel, Desinfektionsmittel oder Kühlmittel sein, die für Ihre Verwendung mit Trinkwasser verdünnt werden können. Die Chemikalien können dem Trinkwasser als Flüssigkeit oder als Feststoff beigefügt werden.

Fluidisch verbunden kann bedeuten, dass Trinkwasser zwischen beispielweise zwei fluidisch verbundenen Elementen fließen kann. Beispielweise kann das Trinkwasser vom Einlass zum Auslass, zur Öffnung und/oder zum Mischelement fließen.

Mischen von Chemikalien mit Trinkwasser kann die Herstellung einer Lösung, einer Emulsion, einer Dispersion und/oder einer Suspension bedeuten. Demnach können die Chemikalien und das Trinkwasser ineinander gelöst sein oder als fein verteiltes Gemisch vorliegen. Dabei können die Chemikalien ebenfalls als Festkörper in dem Trinkwasser vorliegen.

Eine mindestens bistabile Mechanik kann eine Mechanik mit mindestens zwei energetisch stabilen Zuständen sein, wobei die Änderung von einem Zustand in einen anderen Zustand nur durch Aufwendung von Energie möglich sein können.

Der Auslass des Verbindungselements kann ein Gewinde aufweisen. Das Gewinde kann zum Verbinden des Auslasses mit weiteren Teilen der Mischvorrichtung ausgebildet sein. Ein Teil des Gewindes kann abgeflacht sein, um Druck, beispielsweise Luftdruck, aus dem Mischelement entweichen zu lassen. Auf diese Weise kann die Funktion des Mischelements gewährleistet werden, sodass das Mischelement besonders zuverlässig und einfach zu bedienen sein kann. Insbesondere kann auf diese Weise Luft aus dem Druckregler des Mischelements entweichen, sodass der Druckregler und somit auch die Mischvorrichtung zuverlässig funktionieren kann.

Das Mischelement ist zum Mischen von Chemikalien mit Trinkwasser geeignet. Dabei kann als Mischelement jede Vorrichtung zum Mischen vorgesehen sein.

Das Wort "angeordnet" kann bedeuten, dass die beiden Teile, die aneinander angeordnet sind, miteinander fest verbunden sein können. Beispielweise können die beiden Teile miteinander verklebt, verschweißt, verschraubt oder ähnliches sein.

Es hat sich herausgestellt, dass die erfindungsgemäße Mischvorrichtung besonders zuverlässig und einfach bedienbar ist. Zudem kann die Mischvorrichtung energie- und kostensparsam hergestellt werden. Zudem kann durch das Steuern des Durchflusses mit der mindestens einen bistabilen Mechanik der Durchfluss nicht abrupt geändert werden. Hierdurch kann ein Druckanstieg und damit eine Schädigung des Rohrsystems des Trinkwassers durch die Mischvorrichtung verhindert werden.

Wenn das Ventil zum Steuern des Durchflusses mehr als eine bistabile Mechanik aufweist und die Mechanik somit mehr als zwei stabile Zustände haben kann, kann der Durchfluss besonders gut gesteuert werden.

Eine bistabile Mechanik mit nur zwei stabilen Zuständen kann besonders einfach zu bedienen sein und besonders kostengünstig in der Herstellung sein.

Wenn das Mischelement eine Venturi-Düse ist, können Chemikalien besonders einfach und effizient mit dem Trinkwasser gemischt werden. Eine Venturi-Düse kann keine zusätzliche Energie zum Mischen benötigen, sodass eine Mischvorrichtung mit einer Venturi-Düse besonders energiesparend ist.

Nach einer ersten Ausgestaltung kann die Mischvorrichtung ferner ein Sicherungsmittel und ein Abstandsmittel umfassen, wobei der Auslass und das Mischelement über das Sicherungsmittel und das Abstandsmittel fluidisch verbunden sein können, wobei das Sicherungsmittel räumlich näher an dem Auslass angeordnet sein kann als das Abstandsmittel, wobei das Sicherungsmittel zum Unterbinden eines Rückflusses zum Auslass des Verbindungselements ausgebildet sein kann.

Das Sicherungsmittel kann eine Sicherungseinrichtung nach DIN EN 1717 sein. Das Sicherungsmittel kann dazu dienen, dass kein Trinkwasser zum Auslass des Verbindungselements zurückfließt. Hierbei kann das Sicherungsmittel auf einfache Weise verhindern, dass Chemikalien vom Mischelement in das Trinkwassersystem gelangen.

Ein Sicherungsmittel kann insbesondere ein Typ DB Rohrunterbrecher nach der DIN EN 1717 sein.

Ein Typ DB Rohrunterbrecher kann ein Rohrunterbrecher mit elastischen Membranen mit Belüftungsöffnungen sein, die bei atmosphärischem oder höherem Innendruck und Wasserdurchfluss geschlossen sein können, die jedoch bei einem geringeren als atmosphärischem Druck oder bei keinem Durchfluss Luftzutritt ermöglichen können und bei normalen Druckbedingungen wieder wasserdicht schließen können. Die Armatur kann den Schutz vor Rücksaugen nur durch die Belüftung von der Atmosphäre her bieten, nicht jedoch gegen Rückdrücken. Die Fließrichtung kann senkrecht nach unten sein.

Das Abstandsmittel kann zwischen dem Sicherungsmittel und dem Mischelement angeordnet sein. Das Abstandsmittel kann sicherstellen, dass bei einem Rückfluss von Trinkwasser mit Chemikalien vom Mischelement zum Sicherungsmittel, zunächst noch sauberes Trinkwasser aus dem Abstandsmittel zum Sicherungsmittel zurückläuft.

Mit der ersten Ausgestaltung der Mischvorrichtung kann die Sicherheit der Mischvorrichtung erhöht werden und somit kann die Mischvorrichtung besonders zuverlässig sein, da ein Rückfluss von Chemikalien in das Trinkwassersystem unterbunden werden kann.

Nach einer weiteren Ausgestaltung kann das Abstandsmittel eine Länge von mindestens 100 mm, bevorzugt von 150 mm und besonders bevorzugt von 200 mm aufweisen.

Bei einer Länge von 100 mm kann der Rückfluss von Trinkwasser mit Chemikalien vom Mischelement zum Sicherungsmittel besonders gut verhindert werden. Ab einer Länge von 150 mm kann das Abstandmittel die Voraussetzungen der DIN EN 1717 erfüllen. Bei dem Abstandmittel kann es sich um einen Rohrunterbrecher der Familie D, Typ B handeln. Ab einer Länge von 200 mm kann der Rückfluss von Chemikalien besonders zuverlässig verhindert werden.

Das Abstandsmittel kann einen rohrförmigen Abschnitt aufweisen, wobei der rohrförmige Abschnitt einen Einlassbereich und einen Auslassbereich des Abstandsmittels verbinden kann und wobei der rohrförmige Abschnitt die Form einer Sanduhr aufweisen kann. Die Form einer Sanduhr kann eine Form aus zwei Kegelstümpfen sein, wobei die Deckflächen der beiden Kegelstümpfe aneinander anliegen. Die Form einer Sanduhr kann bedeuten, dass der rohrförmige Abschnitt an seinen beiden Enden einen größeren Durchmesser als an einer Stelle zwischen den beiden Enden aufweist. Die Stelle des rohrförmigen Abschnitts zwischen den beiden Enden des rohrförmigen Abschnitts mit dem kleinsten Durchmesser kann sowohl äquidistant als auch nicht äquidistant zu den beiden Enden des rohrförmigen Abschnitts angeordnet sein. Auf diese Weise kann ein guter Durchlauf gewährleistet werden, wobei zugleich ein zu großer Nachlauf beim Ausschalten der Mischvorrichtung unterbunden werden kann. Somit kann die Mischvorrichtung besonders einfach bedienbar und energiesparend sein.

Der Durchmesser des rohrförmigen Abschnitts an den beiden Enden kann 7 mm - 9 mm betragen. Der kleinsten Durchmesser des rohrförmigen Abschnitts kann 5 mm - 7 mm betragen. In diesem Bereich kann ein guter Durchlauf gewährleistet werden.

Das Abstandsmittel kann einstückig spritzgegossen werden. Somit kann das Abstandsmittel besonders günstig und stabil sein, sodass auch die Mischvorrichtung besonders zuverlässig und kostengünstig sein kann.

Der Auslassbereich kann mindestens einen Expansionsbereich umfassen, wobei sich der mindestens eine Expansionsbereich in Flussrichtung gesehen von dem Ende des rohrförmigen Abschnitts entgegen der Flussrichtung erstrecken kann. Auf diese Weise können Turbulenzen in der Flüssigkeit reduziert werden, sodass die Mischvorrichtung einfach zu bedienen sein kann und die Mischvorrichtung zuverlässig funktionieren kann. Der mindestens eine Expansionsbereich kann den rohrförmigen Abschnitt umgeben.

Die Mischvorrichtung kann einen Druckregler umfassen, wobei der Druckregler fluidisch mit dem Sicherungsmittel und dem Abstandsmittel verbunden sein kann, und wobei der Druckregler zwischen dem Sicherungsmittel und dem Abstandsmittel angeordnet sein kann. Auf diese Weise kann der Druck an dem Mischelement auf einfache Weise konstant sein, sodass das Mischelement einfach bedienbar sein kann.

Der Druckregler kann einen Eintrittsbereich, einen Austrittsbereich und ein Verschlusselement umfassen, wobei das Verschlusselement zum Reduzieren oder Verschließen des Austrittsbereichs bewegbar sein kann, wobei der Druckregler ein Druckaufnahmeelement umfassen kann, wobei das Druckaufnahmeelement zum Bewegen des Verschlusselements entgegen einer Federkraft einer Feder ausgebildet sein kann, sodass der Austrittsbereich reduziert oder verschlossen werden kann, wobei das Druckaufnahmeelement zur Aufnahme des Drucks ausgehend von dem Mischelement ausgebildet sein kann. Auf diese Weise kann der Druckregler besonders günstig und somit das Mischelement besonders kostengünstig ausgebildet sein.

Der Druck ausgehend von dem Mischelement kann der Staudruck sein, der an einer Venturi Düse entstehen kann. Hierdurch kann bei einem zu hohen Durchfluss, und somit einem zu großen Druck, der Staudruck an der Venturi Düse steigen, sodass der Staudruck der Venturi Düse auf das Druckaufnahmeelement wirken kann. Das Druckaufnahmeelement kann in Flussrichtung näher zu dem Mischelement angeordnet sein als der Eintrittsbereich, der Austrittsbereich, das Verschlusselement und die Feder.

Insbesondere kann der Druckregler einen geschlossenen Raum umfassen, wobei der geschlossene Raum teilweise von dem Druckaufnahmeelement umschlossen sein kann, wobei die Feder in dem geschlossenen Raum angeordnet sein kann, und wobei der geschlossene Raum beim Reduzieren oder Verschließen des Austrittsbereichs verringert werden kann. Auf diese Weise kann der Druckregler besonders zuverlässig sein, wobei die Bedienbarkeit besonders einfach sein kann.

Erfindungsgemäss umfasst die mindestens bistabile Mechanik ein Bedienelement, bevorzugt einen Druckknopf, wobei die Zustände der mindestens bistabilen Mechanik durch eine Betätigung des Bedienelements einstellbar sind.

Ein Bedienelement kann den Vorteil haben, dass auf besonders einfache und zuverlässige Weise die Mischvorrichtung genutzt werden kann. Mit einem Druckknopf kann die Mischvorrichtung ganz besonders einfach und zuverlässig bedient werden, da zum Betätigen der Mischvorrichtung nur eine axiale Bewegung nötig sein kann. Zudem kann ein Druckknopf besonders kostengünstig hergestellt werden. Ferner kann ein Druckknopf aufgrund des einfachen Aufbaus besonders zuverlässig sein. Vorteilhafterweise kann das Bedienelement von außen zugänglich für den manuellen Betrieb durch einen Nutzer sein.

Erfindunsggemäss umfasst die mindestens bistabile Mechanik ferner ein Führungsteil und ein Verstellteil, wobei das Verstellteil durch das Bedienelement entlang einer Achse verschiebbar ist, wobei das Verstellteil in unterschiedlichen Positionen entlang der Achse mit dem Führungsteil fixierbar ist, wobei die unterschiedlichen Positionen durch eine Rotation des Verstellteils um die Achse beim Verschieben entlang der Achse auswählbar sind, wobei die unterschiedlichen Positionen den unterschiedlichen Zuständen der mindestens bistabilen Mechanik entsprechen.

Eine solche bistabile Mechanik kann ein Bedienelement, ein Verstellteil und ein Führungsteil umfassen. Dabei kann das Verstellteil an dem Bedienelement angeordnet sein. Das Verstellteil kann auf der Außenfläche mindestens einen vertikalen Vorsprung aufweisen, der auf der dem Bedienelement zugewandten Seite eine Schrägfläche aufweisen kann Das Bedienelement kann auf der Außenfläche mindestens eine Erhebung aufweisen, die an der dem Verstellteil zugewandten Seite keilförmig ausgebildet sein kann. Das Bedienelement und das Verstellteil können in dem Führungsteil angeordnet sein. Ferner kann das Führungsteil auf der Innenfläche mindestens zwei Rillen aufweisen. Dabei können die mindestens zwei Rillen so ausgebildet sein, dass das Verstellteil mit dem mindestens einen Vorsprung in diesen Rillen in Richtung ihrer Längsachse in dem Führungsteil verschiebbar geführt sein kann. Die mindestens zwei Rillen können unterschiedliche Längen aufweisen.

Zur Betätigung des Ventils kann das Bedienelement entlang der Achse bewegt werden. Das Verstellteil kann dadurch mit dem mindestens einen Vorsprung aus den mindestens zwei Rillen ausfahren. Das Verstellteil kann sich mit dem mindestens einen Vorsprung an den Erhebungen des Bedienelements derart abstoßen, dass das Verstellteil um die Achse um einen Rillenabstand rotieren kann. Anschließend kann das Bedienelement wieder zurückfahren. Dabei kann der mindestens eine Vorsprung des Verstellteils in einer der mindestens zwei Rillen des Führungsteils entlangfahren. Da die mindestens zwei Rillen unterschiedliche Längen aufweisen können, kann das Verstellteil in unterschiedlichen Positionen entlang der Achse mit dem Führungsteil fixierbar sein.

Vorteilhafterweise kann das Ventil und damit auch die Mischvorrichtung auf diese Weise besonders einfach und zuverlässig geschaltet werden.

Nach einer weiteren Ausgestaltung kann das Ventil ein Hilfsventil und ein Hauptventil umfassen, wobei das Hilfsventil über die mindestens bistabile Mechanik steuerbar sein kann, wobei das Hauptventil eine Membran umfassen kann, die zum Steuern des Durchflusses verstellbar sein kann, wobei das Hilfsventil zum Verstellen der Membran ausgebildet sein kann, wobei insbesondere das Hilfsventil mit dem Verstellteil mechanisch miteinander verbunden sein kann.

Das Hauptventil kann den Durchfluss des Ventils über die Membran steuern. Dazu kann die Position der Membran verändert werden. Die Membran kann zum Unterbinden des Durchflusses des Trinkwassers ausgebildet sein. Dabei kann die Membran aus wasserdichtem Material sein.

Das Hilfsventil kann zum Verstellen der Membran ausgebildet sein. Dabei kann über das Hilfsventil die Membran verstellt werden. Da die Membran zum Steuern des Durchflusses verstellbar sein kann, kann der Durchfluss über das Hilfsventil gesteuert werden. Das Verstellen der Membran kann über eine axiale, rotatorische und/oder schwenkende Bewegung der Membran erfolgen. Über die Bewegung der Membran kann der Durchfluss des Trinkwassers gesteuert werden.

Es hat sich herausgestellt, dass auf diese Weise der Durchfluss besonders einfach gesteuert werden kann, da weniger Kraft zum Steuern des Ventils benötigt werden kann.

Wenn das Hilfsventil mit dem Verstellteil mechanisch miteinander verbunden sein kann, kann das Hilfsventil besonders einfach bedient werden. Zudem kann eine mechanische Verbindung besonders stabil sein, sodass das Ventil besonders zuverlässig sein kann.

Nach einer weiteren Ausgestaltung kann das Ventil eine Druckkammer, einen Membransitz und eine Entlastungsöffnung umfassen, wobei über den Abstand zwischen der Membran und dem Membransitz der Durchfluss steuerbar sein kann, wobei die Druckkammer zum Aufbau von Druck auf die Membran ausgebildet sein kann, wobei über den Druck der Druckkammer auf die Membran der Abstand zwischen der Membran und dem Membransitz regulierbar sein kann, wobei die Entlastungsöffnung zur Druckentlastung der Druckkammer ausgebildet sein kann, wobei die Druckentlastung über die Entlastungsöffnung mit dem Hilfsventils steuerbar sein kann.

Der Membransitz kann das Gegenstück zur Membran sein. Dabei kann der Membransitz aus wasserdichtem Material bestehen. Der Abstand zwischen dem Membransitz und der Membran kann der Durchlass für das Trinkwasser sein, worüber der Durchfluss des Trinkwassers gesteuert werden kann. Beim Verschließen des Ventils kann der Membransitz und die Membran gegeneinandergedrückt sein.

Die Druckkammer kann ein Raum sein, in dem Druck aufgebaut werden kann. Der Druck kann durch den Leitungsdruck des Trinkwassers aufgebaut sein. Hierzu kann die Druckkammer mit dem mindestens einen Einlass des Verbindungselements fluidisch verbunden sein. Die Druckkammer kann Druck auf die Membran ausüben. Hierbei kann die Membran in Richtung des Membransitzes oder sogar auf den Membransitz gedrückt werden. Auf diese Weise kann der Abstand zwischen der Membran und dem Membransitz regulierbar sein.

Die Druckkammer, die Membran und der Membransitz können entlang einer Achse angeordnet sein. Somit kann der Druck der Druckkammer geradlinig auf die Membran aufgebracht werden.

Die Entlastungsöffnung kann zur Druckentlastung der Druckkammer ausgebildet sein. Dazu kann die Entlastungsöffnung mit dem mindestens einen Auslass des Verbindungselements fluidisch verbunden sein. Mit dem Hilfsventil kann die Entlastungsöffnung geschlossen, teilweise geöffnet und/oder geöffnet werden.

Hierdurch kann der Druck aus der Druckkammer nicht, teilweise oder ganz entweichen. Auf diese Weise kann der Druck auf die Membran eingestellt werden, sodass der Durchfluss reguliert werden kann.

Vorteilhafterweise kann eine Mischvorrichtung mit einem solchen Ventil besonders zuverlässig und sicher sein.

Nach einer weiteren Ausgestaltung kann das Ventil in der Öffnung mit einem Klemmelement befestigt sein, wobei das Klemmelement zum Entnehmen des Ventils lösbar sein kann.

Ein Klemmelement kann jedes Element sein, dass durch eine Spannung das Ventil in der Öffnung fixieren kann. Zum Lösen des Ventils kann die Spannung des Klemmelements reduziert werden.

Durch das Klemmelement kann das Ventil besonders einfach zur Reinigung der Mischvorrichtung entnommen werden. Dadurch wird die Reinigung erleichtert, sodass die Bedienung der Mischvorrichtung erleichtert werden kann.

Nach einer weiteren Ausgestaltung kann das Klemmelement mindestens zwei Schenkel und ein Mittelstück aufweisen, wobei die mindestens zwei Schenkel über das Mittelstück miteinander verbunden sein können.

Ein solches Klemmelement kann besonders einfach zu bedienen und kostengünstig herzustellen sein.

Nach einer weiteren Ausgestaltung kann das Verbindungselement an der Öffnung mindestens zwei Aufnahmen für die Aufnahme des Klemmelements, insbesondere der Schenkel des Klemmelements, aufweisen.

Auf diese Weise kann das Klemmelement besonders sicher und einfach an dem Verbindungselement befestigt werden. Somit kann eine solche Mischvorrichtung besonders zuverlässig und sicher sein.

Nach einer weiteren Ausgestaltung kann die Mischvorrichtung ein Sieb zum Filtern des Trinkwassers umfassen, wobei insbesondere das Sieb in der Öffnung angeordnet ist.

Wenn das Wasser mit einem Sieb gefiltert werden kann, können Schäden an der Mischvorrichtung verhindert werden. Somit kann die Mischvorrichtung mit einem Sieb besonders zuverlässig sein.

Wenn das Sieb in der Öffnung angeordnet werden kann, kann das Wasser vor dem Ventil gefiltert werden. Hierdurch können Schäden an dem Ventil verhindert werden. Das Ventil kann dabei das empfindlichste Teil der Mischvorrichtung sein, sodass die Zuverlässigkeit erhöht wird.

Nach einer weiteren Ausgestaltung kann das Verbindungselement mindestens einen Anschluss zum Anschließen einer weiteren Mischvorrichtung aufweisen.

Auf diese Weise können an einen Trinkwasseranschluss mehrere Mischvorrichtungen angebracht werden, sodass keine weiteren Trinkwasseranschlüssen benötigt werden können. Daher kann die Installation von mehreren Mischvorrichtungen besonders kosten- und energiesparend sein.

Erfindungsgemäß wird diese Aufgabe gemäß einem zweiten Aspekt der Erfindung durch ein System zum Mischen von, insbesondere flüssigen, Chemikalien mit Trinkwasser gelöst, wobei das System mindestens zwei erfindungsgemäße Mischvorrichtungen umfasst.

Mit dem System werden die zuvor genannten Vorteile erreicht. Zudem kann mit einem System mehreren Benutzern gleichzeitig die Entnahme von Trinkwasser mit Chemikalien ermöglicht werden. Ferner können auch mindestens zwei Mischvorrichtungen mit unterschiedlichen Chemikalien angebracht werden. Hierdurch wird die Benutzung erleichtert.

Erfindungsgemäß wird diese Aufgabe gemäß einem dritten Aspekt der Erfindung durch die Verwendung einer erfindungsgemäßen Mischvorrichtung oder eines erfindungsgemäßen Systems zum Mischen von Reinigungsmitteln, Spülmitteln und Desinfektionsmitteln, insbesondere für Großküchen, Industriebetriebe, landwirtschaftliche Betriebe und Betriebe des Nahrungsmittelgewerbes, oder zum Mischen von Bearbeitungszusätzen, Bohrmitteln und Schneidemitteln gelöst.

Mit der Verwendung der Mischvorrichtung werden die zuvor genannten Vorteile erreicht.

Nachfolgend wird die Erfindung anhand von Ausführungsbeispielen zeigenden Zeichnungen näher erläutert. Es zeigen jeweils schematisch:
- Fig. 1: eine schematische Darstellung eines erfindungsgemäßen Mischelements;
- Fig. 2: einen Auslass eines Verbindungselements;
- Fig. 3: einen Querschnitt durch ein Abstandsmittel;
- Fig. 4: einen Querschnitt durch einen Druckregler;
- Fig. 5: eine schematische Darstellung einer mindestens bistabilen Mechanik und eines Ventils; und
- Fig. 6: eine Explosionsansicht eines Verbindungselements mit einem Ventil und einem Klemmelement.

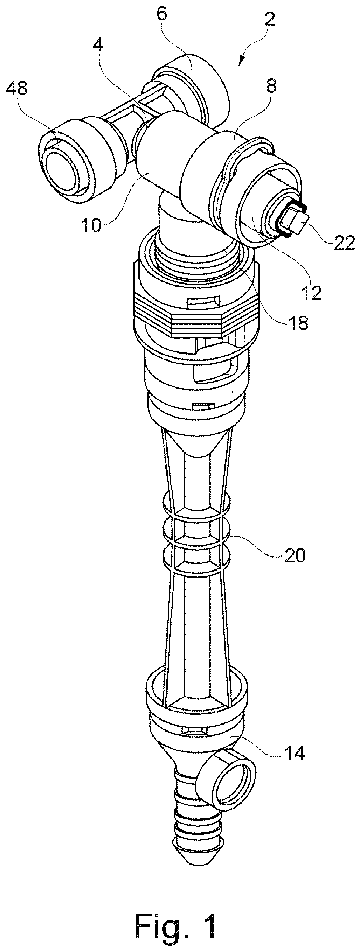

In Fig. 1 ist eine Mischvorrichtung 2 zum Mischen von, insbesondere flüssigen, Chemikalien mit Trinkwasser gezeigt. Die Mischvorrichtung hat ein Verbindungselement 4 umfassend mindestens einen Einlass 6 zum Anschließen an ein Trinkwassersystem, eine Öffnung 8 zur Aufnahme eines Ventils und einen Auslass 10. Der Einlass 6, die Öffnung 8 und der Auslass 10 sind fluidisch verbunden. Die Mischvorrichtung 2 hat ein Ventil 12, wobei das Ventil 12 in der Öffnung 8 des Verbindungselements 4 angeordnet ist. Mit dem Ventil 12 ist der Durchfluss vom Einlass 6 zum Auslass 10 steuerbar. Die Mischvorrichtung hat ein Mischelement 14. Das Mischelement 14 kann eine Venturi-Düse sein. Das Mischelement 14 und der Auslass 10 sind fluidisch verbunden. Das Mischelement 14 ist zum Mischen von Chemikalien mit Trinkwasser ausgebildet. Das Ventil 12 weist zum Steuern des Durchflusses mindestens eine bistabile Mechanik 16 auf.

Die Mischvorrichtung 2 in Fig. 1 umfasst ferner ein Sicherungsmittel 18 und ein Abstandsmittel 20, wobei der Auslass 10 und das Mischelement 14 über das Sicherungsmittel 18 und das Abstandsmittel 20 fluidisch verbunden sind.

Das Sicherungsmittel 18 ist räumlich näher an dem Auslass 10 angeordnet als das Abstandsmittel 20. Das Sicherungsmittel 18 ist zum Unterbinden eines Rückflusses zum Auslass 10 des Verbindungselements 4 ausgebildet.

Das Abstandsmittel 20 weist dabei eine Länge von mindestens 100 mm auf. Das Abstandmittel kann auch eine Länge von mindestens 150 mm oder von mindestens 200 mm aufweisen.

Die mindestens bistabile Mechanik 16 umfasst ein Bedienelement 22. Das Bedienelement kann ein Druckknopf 22 sein. Die Zustände der mindestens bistabilen Mechanik 16 sind durch eine Betätigung des Bedienelements 22 einstellbar.

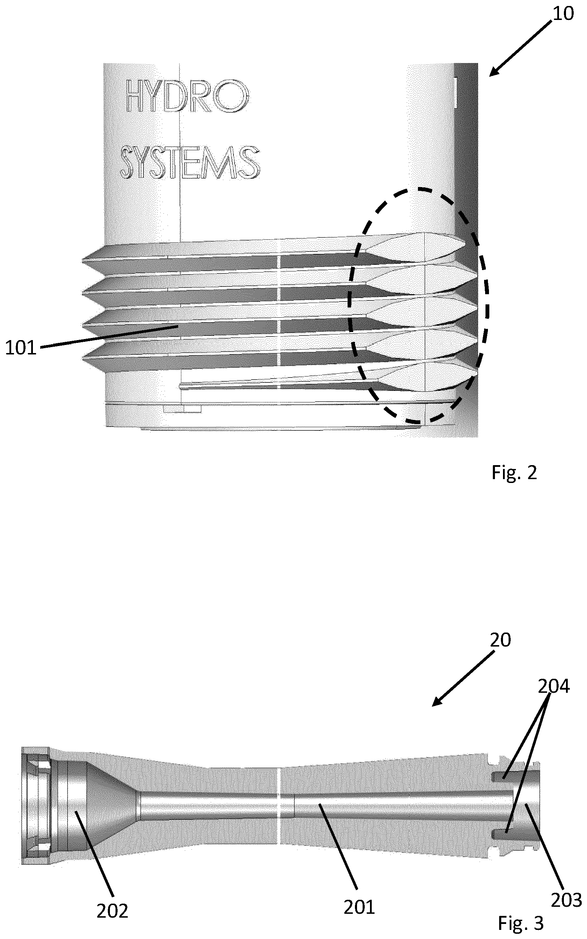

Fig. 2 zeigt einen Auslass 10 eines Verbindungselements 4.

Der Auslass 10 des Verbindungselements 4 weist ein Gewinde 101 zum Verbinden des Auslasses 10 mit weiteren Teilen der Mischvorrichtung auf. Ein Teil des Gewindes 101 kann abgeflacht sein, um den Druck aus dem Mischelement 2 entweichen zu lassen. Der abgeflachte Teil des Gewindes 101 ist mit dem gestrichelten Kreis markiert.

Fig. 3 zeigt einen Querschnitt durch ein Abstandsmittel 20.

Das Abstandsmittel 20 weist einen rohrförmigen Abschnitt 201 auf, wobei der rohrförmige Abschnitt 201 den Einlassbereich 202 und den Auslassbereich 203 des Abstandsmittels 20 verbindet. Der rohrförmige Abschnitt 20 weist die Form einer Sanduhr auf.

Das Abstandsmittel 20 ist einstückig spritzgegossen.

Der Auslassbereich 203 umfasst einen Expansionsbereich 204, wobei sich der Expansionsbereich 204 in Flussrichtung gesehen von dem Ende des rohrförmigen Abschnitts 201 entgegen der Flussrichtung erstreckt.

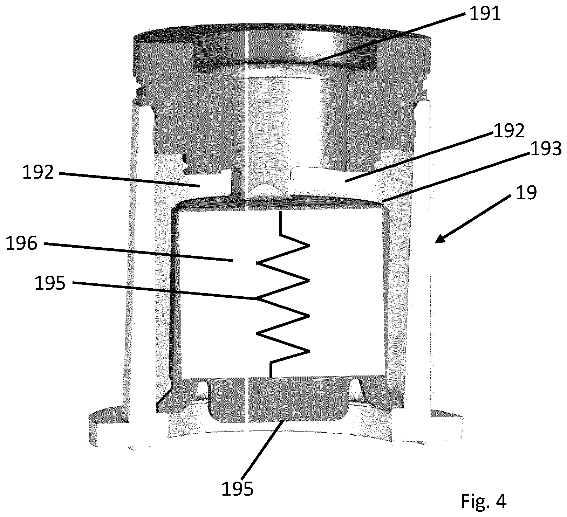

Fig. 4 zeigt einen Querschnitt durch eine Druckregler 19,

Die Mischvorrichtung 2 umfasst einen Druckregler 19, wobei der Druckregler 19 fluidisch mit dem Sicherungsmittel 18 und dem Abstandsmittel 20 verbunden ist, und wobei der Druckregler 19 zwischen dem Sicherungsmittel 18 und dem Abstandsmittel 20 angeordnet ist.

Der Druckregler 19 umfasst einen Eintrittsbereich 191, einen Austrittsbereich 192 und ein Verschlusselement 193, wobei das Verschlusselement 193 zum Reduzieren oder Verschließen des Austrittsbereichs 192 bewegbar ist, wobei der Druckregler ein Druckaufnahmeelement 194 umfasst. Das Druckaufnahmeelement 194 ist zum Bewegen des Verschlusselements 193 entgegen einer Federkraft einer Feder 195 ausgebildet, sodass der Austrittsbereich 192 reduziert oder verschlossen wird. Das Druckaufnahmeelement 194 ist zur Aufnahme des Drucks ausgehend von dem Mischelement 14 ausgebildet.

Das Druckaufnahmeelement 194 ist in Flussrichtung näher zu dem Mischelement 14 angeordnet als der Eintrittsbereich 191, der Austrittsbereich 192, das Verschlusselement 193 und die Feder 195.

Insbesondere umfasst der Druckregler 19 einen geschlossenen Raum 196, wobei der geschlossene Raum 196 teilweise von dem Druckaufnahmeelement 194 umschlossen ist. Die Feder 195 ist in dem geschlossenen Raum 196 angeordnet. Der geschlossene Raum 196 wird beim Reduzieren oder Verschließen des Austrittsbereichs 192 verringert.

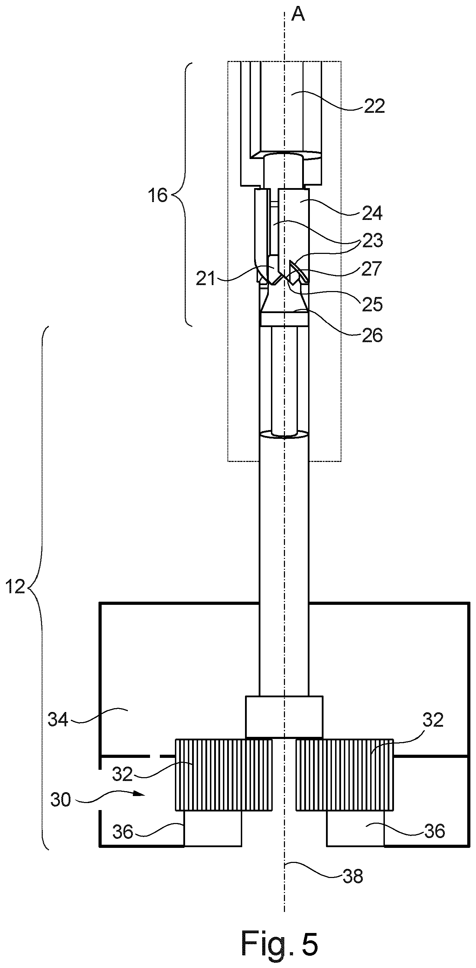

In Fig. 5 ist eine schematische Darstellung einer mindestens bistabilen Mechanik und eines Ventils gezeigt. Die mindestens bistabile Mechanik 16 umfasst ferner eine Führungsteil 24 und ein Verstellteil 26. Das Verstellteil 26 ist durch das Bedienelement 22 entlang einer Achse A verschiebbar. Das Verstellteil 26 ist in unterschiedlichen Positionen entlang der Achse A mit dem Führungsteil 24 fixierbar. Die unterschiedlichen Positionen sind durch eine Rotation des Verstellteils 26 um die Achse A beim Verschieben entlang der Achse A auswählbar. Die unterschiedlichen Positionen entsprechen den unterschiedlichen Zuständen der mindestens bistabilen Mechanik 16.

Das Verstellteil 26 ist an dem Bedienelement 22 angeordnet. Das Verstellteil 26 weist auf der Außenfläche vertikale Vorsprünge 25 auf, die auf der dem Bedienelement 22 zugewandten Seite eine Schrägfläche 27 aufweisen. Das Bedienelement 22 weist auf der Außenfläche Erhebungen 21 auf, die an der dem Verstellteil 26 zugewandten Seite keilförmig ausgebildet sind. Das Bedienelement 22 und das Verstellteil 26 sind in dem Führungsteil 24 angeordnet. Ferner weist das Führungsteil auf der Innenfläche Rillen 23 auf. Dabei sind die Rillen 23 so ausgebildet, dass das Verstellteil 26 mit den Vorsprüngen 25 in diesen Rillen 23 in Richtung der Achse A in dem Führungsteil 24 verschiebbar geführt ist. Die Rillen 23 weisen unterschiedliche Längen auf.

Zur Betätigung des Ventils 12 wird das Bedienelement 22 entlang der Achse A bewegt. Das Verstellteil 26 fährt dadurch mit den Vorsprünge 25 aus den Rillen 23 aus. Das Verstellteil 26 stößt sich mit den Vorsprüngen 25 an den Erhebungen 21 des Bedienelements 22 derart ab, dass das Verstellteil 26 um die Achse A um einen Rillenabstand rotiert. Anschließend fährt das Bedienelement 22 wieder zurück. Dabei fahren die Vorsprünge 25 des Verstellteils 26 in eine der Rillen 23 des Führungsteils 24 entlang. Da die Rillen 23 unterschiedliche Längen aufweisen, ist das Verstellteil 26 in unterschiedlichen Positionen entlang der Achse A mit dem Führungsteil 24 fixierbar.

Das Ventil 12 umfasst ein Hilfsventil 28 und ein Hauptventil 30,
wobei das Hilfsventil 28 über die mindestens bistabile Mechanik 16 steuerbar ist. Das Hauptventil 30 umfasst eine Membran 32, die zum Steuern des Durchflusses verstellbar ist. Das Hilfsventil 28 ist zum Verstellen der Membran 32 ausgebildet. Das Hilfsventil 28 ist mit dem Verstellteil 26 mechanisch verbunden.

Das Ventil 12 umfasst eine Druckkammer 34, einen Membransitz 36 und eine Entlastungsöffnung 38. Über den Abstand zwischen der Membran 32 und dem Membransitz 36 ist der Durchfluss steuerbar. Die Druckkammer 34 ist zum Aufbau von Druck auf die Membran 32 ausgebildet, wobei über den Druck der Druckkammer 34 auf die Membran 32 der Abstand zwischen der Membran 32 und dem Membransitz 36 regulierbar ist. Die Entlastungsöffnung 38 ist zur Druckentlastung der Druckkammer 34 ausgebildet, wobei die Druckentlastung über die Entlastungsöffnung 38 mit dem Hilfsventil 28 steuerbar ist.

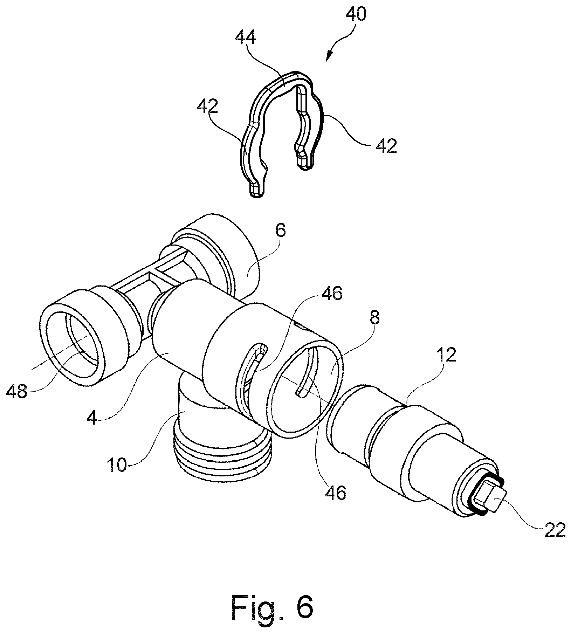

Fig. 6 zeigt eine Explosionsansicht eines Verbindungselements mit einem Ventil und einem Klemmelement. Das Ventil 12 ist in der Öffnung 8 mit einem Klemmelement 40 befestigt, wobei das Klemmelement 40 zum Entnehmen des Ventils 12 lösbar ist.

Das Klemmelement 40 weist mindestens zwei Schenkel 42 und ein Mittelstück 44 auf, wobei die mindestens zwei Schenkel 42 über das Mittelstück 44 miteinander verbunden sind.

Das Verbindungselement 4 weist an der Öffnung 8 mindestens zwei Aufnahmen 46 für die Aufnahme des Klemmelements 40, insbesondere der Schenkel 42 des Klemmelements 40, auf.

Die Mischvorrichtung 2 umfasst ein Sieb zum Filtern des Trinkwassers, wobei das Sieb in der Öffnung 8 angeordnet ist.

Das Verbindungselement 4 weist mindestens einen Anschluss 48 zum Anschließen einer weiteren Mischvorrichtung 2 auf.

Ein nicht dargestelltes System zum Mischen von, insbesondere flüssigen, Chemikalien mit Trinkwasser umfasst mindestens zwei Mischvorrichtung 2.

Eine Mischvorrichtung 2 oder ein System kann zum Mischen von Reinigungsmitteln, Spülmitteln und Desinfektionsmitteln, insbesondere für Großküchen, Industriebetriebe, landwirtschaftliche Betriebe und Betriebe des Nahrungsmittelgewerbes, oder zum Mischen von Bearbeitungszusätzen, Bohrmitteln und Schneidemitteln verwendet werden.

## Patentansprüche

1. Mischvorrichtung (2) zum Mischen von, insbesondere flüssigen, Chemikalien mit Trinkwasser,
mit einem Verbindungselement (4) umfassend mindestens einen Einlass (6) zum Anschließen an ein Trinkwassersystem, eine Öffnung (8) zur Aufnahme eines Ventils (12) und einen Auslass (10),
wobei der Einlass (6), die Öffnung (8) und der Auslass (10) fluidisch verbunden sind,
mit einem Ventil (12),
wobei das Ventil (12) in der Öffnung (8) des Verbindungselements (4) angeordnet ist,
wobei mit dem Ventil (12) der Durchfluss vom Einlass (6) zum Auslass (10) steuerbar ist,
mit einem Mischelement (14), insbesondere einer Venturi-Düse,
wobei das Mischelement (14) und der Auslass (10) fluidisch verbunden sind, wobei das Mischelement (14) zum Mischen von Chemikalien mit Trinkwasser ausgebildet ist,
**dadurch gekennzeichnet, dass**
das Ventil (12) zum Steuern des Durchflusses mindestens eine bistabile Mechanik (16) aufweist, die mindestens bistabile Mechanik (16) ein Bedienelement (22), bevorzugt einen Druckknopf (22), umfasst,
wobei die Zustände der mindestens bistabilen Mechanik (16) durch eine Betätigung des Bedienelements (22) einstellbar sind,
wobei die mindestens bistabile Mechanik (16) ferner ein Führungsteil (24) und ein Verstellteil (26) umfasst,
wobei das Verstellteil (26) durch das Bedienelement (22) entlang einer Achse (A) verschiebbar ist,
wobei das Verstellteil (26) in unterschiedlichen Positionen entlang der Achse (A) mit dem Führungsteil (24) fixierbar ist,
wobei die unterschiedlichen Positionen durch eine Rotation des Verstellteils (26) um die Achse (A) beim Verschieben entlang der Achse (A) auswählbar sind, wobei die unterschiedlichen Positionen den unterschiedlichen Zustände der mindestens bistabilen Mechanik (16) entsprechen.

2. Mischvorrichtung nach Anspruch 1,
**dadurch gekennzeichnet, dass**
die Mischvorrichtung (2) ferner ein Sicherungsmittel (18) und ein Abstandsmittel (20) umfasst,
wobei der Auslass (10) und das Mischelement (14) über das Sicherungsmittel (18) und das Abstandsmittel (20) fluidisch verbunden sind,
wobei das Sicherungsmittel (18) räumlich näher an dem Auslass (10) angeordnet ist als das Abstandsmittel (20),
wobei das Sicherungsmittel (18) zum Unterbinden eines Rückflusses zum Auslass (10) des Verbindungselements (4) ausgebildet ist.

3. Mischvorrichtung nach Anspruch 2,
**dadurch gekennzeichnet, dass**
das Abstandsmittel (20) eine Länge von mindestens 100 mm, bevorzugt von 150 mm und besonders bevorzugt von 200 mm aufweist.

4. Mischvorrichtung nach einem der Ansprüche 1 bis 3,
**dadurch gekennzeichnet, dass**
das Ventil (12) ein Hilfsventil (28) und ein Hauptventil (30) umfasst,
wobei das Hilfsventil (28) über die mindestens bistabile Mechanik (16) steuerbar ist, wobei das Hauptventil (30) eine Membran (32) umfasst, die zum Steuern des Durchflusses verstellbar ist,
wobei das Hilfsventil (28) zum Verstellen der Membran (32) ausgebildet ist,
wobei insbesondere das Hilfsventil (28) mit dem Verstellteil (26) mechanisch verbunden ist.

5. Mischvorrichtung nach Anspruch 4,
**dadurch gekennzeichnet, dass**
das Ventil (12) eine Druckkammer (34), einen Membransitz (36) und eine Entlastungsöffnung (38) umfasst,
wobei über den Abstand zwischen der Membran (32) und dem Membransitz (36) der Durchfluss steuerbar ist,
wobei die Druckkammer (34) zum Aufbau von Druck auf die Membran (32) ausgebildet ist, wobei über den Druck der Druckkammer (34) auf die Membran (32) der Abstand zwischen der Membran (32) und dem Membransitz (36) regulierbar ist, wobei die Entlastungsöffnung (38) zur Druckentlastung der Druckkammer (34) ausgebildet ist,
wobei die Druckentlastung über die Entlastungsöffnung (38) mit dem Hilfsventil (28) steuerbar ist.

6. Mischvorrichtung nach einem der Ansprüche 1 bis 5,
**dadurch gekennzeichnet, dass**
das Ventil (12) in der Öffnung (8) mit einem Klemmelement (40) befestigt ist, wobei das Klemmelement (40) zum Entnehmen des Ventils (12) lösbar ist.

7. Mischvorrichtung nach Anspruch 6,
**dadurch gekennzeichnet, dass**
das Klemmelement (40) mindestens zwei Schenkel (42) und ein Mittelstück (44) aufweist,
wobei die mindestens zwei Schenkel (42) über das Mittelstück (44) miteinander verbunden sind.

8. Mischvorrichtung nach einem der Ansprüche 6 oder 7,
**dadurch gekennzeichnet, dass**
das Verbindungselement (4) an der Öffnung (8) mindestens zwei Aufnahmen (46) für die Aufnahme des Klemmelements (40), insbesondere der Schenkel (42) des Klemmelements (40), aufweist.

9. Mischvorrichtung nach einem der Ansprüche 1 bis 8,
**dadurch gekennzeichnet, dass**
die Mischvorrichtung (2) ein Sieb zum Filtern des Trinkwassers umfasst,
wobei insbesondere das Sieb in der Öffnung (8) angeordnet ist.

10. Mischvorrichtung nach einem der Ansprüche 1 bis 9,
**dadurch gekennzeichnet, dass**
das Verbindungselement (4) mindestens einen Anschluss (48) zum Anschließen einer weiteren Mischvorrichtung (2) aufweist.

11. System zum Mischen von, insbesondere flüssigen, Chemikalien mit Trinkwasser
**dadurch gekennzeichnet, dass**
das System mindestens zwei Mischvorrichtungen (2) nach einem der Ansprüche 1 bis 10 umfasst.

12. Verwendung einer Mischvorrichtung (2) nach einem der Ansprüche 1 bis 10 oder eines System nach Anspruch 11 zum Mischen von Reinigungsmitteln, Spülmitteln und Desinfektionsmitteln, insbesondere für Großküchen, Industriebetriebe, landwirtschaftliche Betriebe und Betriebe des Nahrungsmittelgewerbes, oder zum Mischen von Bearbeitungszusätzen, Bohrmitteln und Schneidemitteln.

## Claims

1. Mixing device (2) for mixing chemicals, in particular liquid chemicals, with drinking water,
having a connecting element (4) comprising at least one inlet (6) for connection to a drinking-water system, comprising an opening (8) for receiving a valve (12) and comprising an outlet (10),
wherein the inlet (6), the opening (8) and the outlet (10) are fluidically connected,
having a valve (12),
wherein the valve (12) is arranged in the opening (8) of the connecting element (4),
wherein the throughflow from the inlet (6) to the outlet (10) can be controlled by the valve (12),
having a mixing element (14), in particular a Venturi nozzle,
wherein the mixing element (14) and the outlet (10) are fluidically connected,
wherein the mixing element (14) is designed for mixing chemicals with drinking water,
**characterized in that,**
for the purpose of controlling the throughflow, the valve (12) has at least one bistable mechanism (16), the at least bistable mechanism (16) comprising an operating element (22), preferably a pushbutton (22),
wherein the states of the at least bistable mechanism (16) can be set by actuation of the operating element (22),
wherein the at least bistable mechanism (16) also comprises a guide part (24) and an adjustment part (26), wherein the adjustment part (26) can be displaced along an axis (A) by the operating element (22),
wherein the adjustment part (26) can be fixed in different positions along the axis (A) by the guide part (24),
wherein the different positions can be selected by rotation of the adjustment part (26) about the axis (A) as it is being displaced along the axis (A),
wherein the different positions correspond to the different states of the at least bistable mechanism (16).

2. Mixing device according to Claim 1,
**characterized in that**
the mixing device (2) also comprises a securing means (18) and a spacing means (20),
wherein the outlet (10) and the mixing element (14) are fluidically connected via the securing means (18) and the spacing means (20),
wherein the securing means (18) is arranged more closely to the outlet (10) than is the spacing means (20),
wherein the securing means (18) is designed for preventing backflow to the outlet (10) of the connecting element (4).

3. Mixing device according to Claim 2,
**characterized in that**
the spacing means (20) has a length of at least 100 mm, preferably of 150 mm and particularly preferably of 200 mm.

4. Mixing device according to one of Claims 1 to 3,
**characterized in that**
the valve (12) comprises an auxiliary valve (28) and a main valve (30),
wherein the auxiliary valve (28) can be controlled via the at least bistable mechanism (16),
wherein the main valve (30) comprises a diaphragm (32), which can be adjusted for the purpose of controlling the throughflow,
wherein the auxiliary valve (28) is designed for adjusting the diaphragm (32),
wherein in particular the auxiliary valve (28) is mechanically connected to the adjustment part (26).

5. Mixing device according to Claim 4,
**characterized in that**
the valve (12) comprises a pressure chamber (34), a diaphragm seat (36) and a relief opening (38),
wherein the throughflow can be controlled via the distance between the diaphragm (32) and the diaphragm seat (36),
wherein the pressure chamber (34) is designed for building up pressure on the diaphragm (32), wherein the distance between the diaphragm (32) and the diaphragm seat (36) can be regulated via the pressure applied to the diaphragm (32) by the pressure chamber (34),
wherein the relief opening (38) is designed for relieving pressure from the pressure chamber (34),
wherein the relief of pressure via the relief opening (38) can be controlled by the auxiliary valve (28).

6. Mixing device according to one of Claims 1 to 5,
**characterized in that**
the valve (12) is fastened in the opening (8) by a clamping element (40),
wherein the clamping element (40) can be released in order for the valve (12) to be removed.

7. Mixing device according to Claim 6,
**characterized in that**
the clamping element (40) has at least two limbs (42) and a centrepiece (44),
wherein the at least two limbs (42) are connected to one another via the centrepiece (44).

8. Mixing device according to either of Claims 6 and 7,
**characterized in that,**
at the opening (8), the connecting element (4) has at least two mounts (46) for receiving the clamping element (40), in particular the limbs (42) of the clamping element (40).

9. Mixing device according to one of Claims 1 to 8,
**characterized in that**
the mixing device (2) comprises a screen for filtering the drinking water,
wherein in particular the screen is arranged in the opening (8).

10. Mixing device according to one of Claims 1 to 9,
**characterized in that**
the connecting element (4) has at least one connection (48) for the connection of a further mixing device (2).

11. System for mixing chemicals, in particular liquid chemicals, with drinking water,
**characterized in that**
the system comprises at least two mixing devices (2) according to one of Claims 1 to 10.

12. Use of a mixing device (2) according to one of Claims 1 to 10 or of a system according to Claim 11 for mixing cleaning agents, detergents and disinfectants, in particular for canteen kitchens, industrial companies, agricultural companies and companies in the food industry, or for mixing machining additives, drilling fluids and cutting fluids.

## Revendications

1. Dispositif de mélange (2) pour mélanger des produits chimiques, en particulier liquides, avec de l'eau potable,
avec un élément de liaison (4) comprenant au moins une entrée (6) destinée à être raccordée à un système d'eau potable, une ouverture (8) destinée à recevoir une vanne (12) et une sortie (10),
l'entrée (6), l'ouverture (8) et la sortie (10) étant reliées fluidiquement,
avec une vanne (12),
la vanne (12) étant disposée dans l'ouverture (8) de l'élément de liaison (4),
le flux de l'entrée (6) vers la sortie (10) pouvant être commandé avec la vanne (12),
avec un élément de mélange (14), en particulier une buse Venturi,
l'élément de mélange (14) et la sortie (10) étant reliés fluidiquement,
l'élément de mélange (14) étant réalisé pour mélanger des produits chimiques avec de l'eau potable,
**caractérisé en ce que**
la vanne (12) de commande du flux comporte un mécanisme bistable (16), l'au moins mécanisme bistable (16) comprend un élément d'utilisation (22), de manière préférée un bouton-poussoir (22),
les états de l'au moins un mécanisme bistable (16) pouvant être réglés par un actionnement de l'élément d'utilisation (22),
l'au moins un mécanisme bistable (16) comprenant en outre une partie de guidage (24) et une partie d'ajustement (26),
la partie d'ajustement (26) pouvant être coulissée le long d'un axe (A) par l'élément d'utilisation (22),
la partie d'ajustement (26) pouvant être fixée avec la partie de guidage (24) le long de l'axe (A) dans différentes positions,
les différentes positions pouvant être choisies lors du coulissement le long de l'axe (A) par une rotation de la partie d'ajustement (26) autour de l'axe (A),
les différentes positions correspondants aux différents états de l'au moins un mécanisme bistable (16).

2. Dispositif de mélange selon la revendication 1,
**caractérisé en ce que**
le dispositif de mélange (2) comprend en outre un moyen de blocage (18) et un moyen d'espacement (20),
la sortie (10) et l'élément de mélange (14) étant reliés fluidiquement par le moyen de blocage (18) et le moyen d'espacement (20),
le moyen de blocage (18) étant disposé spatialement davantage à proximité de la sortie (10) que le moyen d'espacement (20),
le moyen de blocage (18) étant réalisé pour empêcher un reflux vers la sortie (10) de l'élément de liaison (4).

3. Dispositif de mélange selon la revendication 2,
**caractérisé en ce que**
le moyen d'espacement (20) présente une longueur d'au moins 100 mm, de manière préférée de 150 mm et de manière particulièrement préférée de 200 mm.

4. Dispositif de mélange selon l'une des revendications 1 à 3,
**caractérisé en ce que**
la soupape (12) comprend une soupape auxiliaire (28) et une soupape principale (30),
la soupape auxiliaire (28) pouvant être commandée par l'au moins un mécanisme bistable (16),
la soupape principale (30) comprenant une membrane (32), qui peut être ajustée pour commander le flux,
la soupape auxiliaire (28) étant réalisée pour ajuster la membrane (32),
en particulier la soupape auxiliaire (28) étant reliée mécaniquement à la partie d'ajustement (26).

5. Dispositif de mélange selon la revendication 4,
**caractérisé en ce que**
la soupape (12) comprend une chambre de pression (34), un siège (36) de membrane et une ouverture de décharge (38),
le flux pouvant être commandé par l'espacement entre la membrane (32) et le siège (36) de membrane,
la chambre de pression (34) étant réalisée pour établir une pression sur la membrane (32), l'espacement entre la membrane (32) et le siège (36) de membrane pouvant être régulé par la pression de la chambre de pression (34) sur la membrane (32),
l'ouverture de décharge (38) étant réalisée pour la dépressurisation de la chambre de pression (34),
la dépressurisation par l'ouverture de décharge (38) pouvant être commandée avec la vanne auxiliaire (28).

6. Dispositif de mélange selon l'une des revendications 1 à 5,
**caractérisé en ce que**
la vanne (12) est attachée avec un élément de serrage (40) dans l'ouverture (8),
l'élément de serrage (40) pouvant être desserré pour retirer la vanne (12).

7. Dispositif de mélange selon la revendication 6,
**caractérisé en ce que**
l'élément de serrage (40) comporte au moins deux branches (42) et une pièce centrale (44),
les au moins deux branches (42) étant reliées l'une à l'autre par la pièce centrale (44).

8. Dispositif de mélange selon l'une des revendications 6 ou 7,
**caractérisé en ce que**
l'élément de liaison (4) comporte sur l'ouverture (8) au moins deux logements (46) pour le logement de l'élément de serrage (40), en particulier des branches (42) de l'élément de serrage (40).

9. Dispositif de mélange selon l'une des revendications 1 à 8,
**caractérisé en ce que**
le dispositif de mélange (2) comprend un tamis pour filtrer l'eau potable,
le tamis étant disposé en particulier dans l'ouverture (8).

10. Dispositif de mélange selon l'une des revendications 1 à 9,
**caractérisé en ce que**
l'élément de liaison (4) comporte au moins un raccord (48) pour raccorder un autre dispositif de mélange (2).

11. Système de mélange de produits chimiques, en particulier liquides, avec de l'eau potable,
**caractérisé en ce que**
le système comprend au moins deux dispositifs de mélange (2) selon l'une des revendications 1 à 10.

12. Utilisation d'un dispositif de mélange (2) selon l'une des revendications 1 à 10 ou d'un système selon la revendication 11 pour mélanger des produits de nettoyage, des produits de rinçage et des produits désinfectants, en particulier pour des cuisines de grande taille, des installations industrielles, des installations agricoles et des installations du secteur agroalimentaire, ou pour mélanger des additifs de traitement, des moyens de perçage et des moyens de coupe.
